# DEMANDE DE BREVET EUROPEEN

(11) **EP 1 586 620 A1**
(43) Date de publication de la demande: **19.10.2005**
(21) Numéro de dépôt: 04291012.5
(22) Date de dépôt: 15.04.2004
(51) Int. Cl.: C10G 33/00, B01D 17/04, B01D 19/00

(54) **Procede de purification de brut de forage, procede de separation d'une emulsion hydrocarbonee eau-dans-l'huile et dispositifs pour leur mise en oeuvre**

(71) Demandeur: Total S.A., 92400 Courbevoie (FR)
(72) Inventeur: Vu, Van-Khoi, 75019 Paris (FR)
(74) Mandataire: Cabinet Hirsch

(57) **Abrégé**

L'invention a pour objet un procédé de purification de brut de forage et un dispositif pour sa mise en oeuvre. Ce procédé comprend une séparation en gaz et émulsion dégazée et séparation de l'émulsion dégazée en eau et huile.

L'invention a aussi pour objet un procédé de séparation d'une émulsion hydrocarbonée et un dispositif pour sa mise en oeuvre. Ce procédé comprend le lavage de l'émulsion au niveau d'une interface huile/eau

## Description

### DOMAINE DE L'INVENTION

L'invention a pour objet un procédé de purification de brut issu de forage et un dispositif pour sa mise en oeuvre, ainsi qu'un procédé de séparation d'une émulsion hydrocarbonée eau-dans-huile et un dispositif pour sa mise en oeuvre.

### ETAT DE LA TECHNIQUE

Les bruts issus de forage doivent être traités pour respecter principalement trois caractéristiques:
- Tension de vapeur RVP (Reid Vapor Pressure) inférieure typiquement à 11 psi, pour assurer la stabilité du brut et éviter tout dégazage lors du transport ou du stockage;
- BSW (Base, Sediment, Water) en général au plus de 0,5%vol;
- Salinité en général inférieure à 100mg/l, en particulier inférieure à 60mg/l.

Des traitements sont donc appliqués de façon classique. Le problème est cependant particulier pour les gisements en mer, plus précisément en mer profonde, dans la mesure où les unités de traitement sont sur des supports flottants. Ceux-ci sont généralement des FPSO (Floating Production Storage and Off-loading) - *navires équipés d'installations de traitement, de production et de déchargement de fluides pétroliers -* ou une association FPU (Floating Production Unit) - *barges équipées d'installations de traitement et de production de fluides pétroliers -* et FSO (Floating Storage and Off-loading) - *navires ou barges équipés de cuves de stockage et* *d'installations de déchargement de fluides pétroliers.* Dans tous les cas, les traitements sont mis en oeuvre dans ce qui est dénommé "topsides" à savoir la partie haute du support flottant.

Ce type de traitement n'est que l'application en mer des systèmes existants à terre. De ce fait, ces systèmes souffrent de plusieurs problèmes, notamment taille, coût d'acquisition et coût de fonctionnement.

L'invention vise à remédier à un des ces problèmes.

### RESUME DE L'INVENTION

L'invention fournit donc un procédé de purification de brut de forage comprenant les étapes suivantes: (a) séparation du brut en deux fractions, gaz et émulsion dégazée; et (b) séparation de ladite émulsion dégazée en eau et huile.

L'invention fournit aussi un dispositif de purification de brut de forage comprenant: (a) une unité de séparation (102; 108) du brut en deux fractions, gaz et émulsion dégazée; et (b) une cuve (112) de séparation de ladite émulsion dégazée en eau et huile.

L'invention fournit aussi un procédé de séparation d'une émulsion hydrocarbonée eau-dans-huile comprenant les étapes suivantes: (i) création d'une interface huile/eau; (ii) lavage de ladite émulsion avec de l'eau au niveau de l'interface huile/eau; et (iii) récupération d'un courant d'huile.

L'invention fournit aussi un dispositif de séparation d'une émulsion hydrocarbonée eau-dans-huile comprenant une cuve (112) munie d'une douche ou système de distribution d'eau (115) de lavage de ladite émulsion avec de l'eau au niveau de l'interface huile/eau.

L'invention fournit encore un navire ou barge comprenant l'un des dispositifs selon l'invention.

### BREVE DESCRIPTION DES DESSINS

- la figure 1 est un flowchart d'un procédé selon l'art antérieur;
- la figure 2 est un flowchart d'un procédé selon un mode de réalisation de l'invention;
- la figure 3 est une vue en coupe d'un dispositif selon un second mode de réalisation de l'invention.
- la figure 4 est un graphe représentant l'évolution de la viscosité de l'émulsion d'un fluide pétrolier en fonction de la teneur en eau.

### DESCRIPTION DETAILLEE DE MODES DE REALISATION

L'invention est maintenant décrite plus en détails en référence aux dessins annexés.

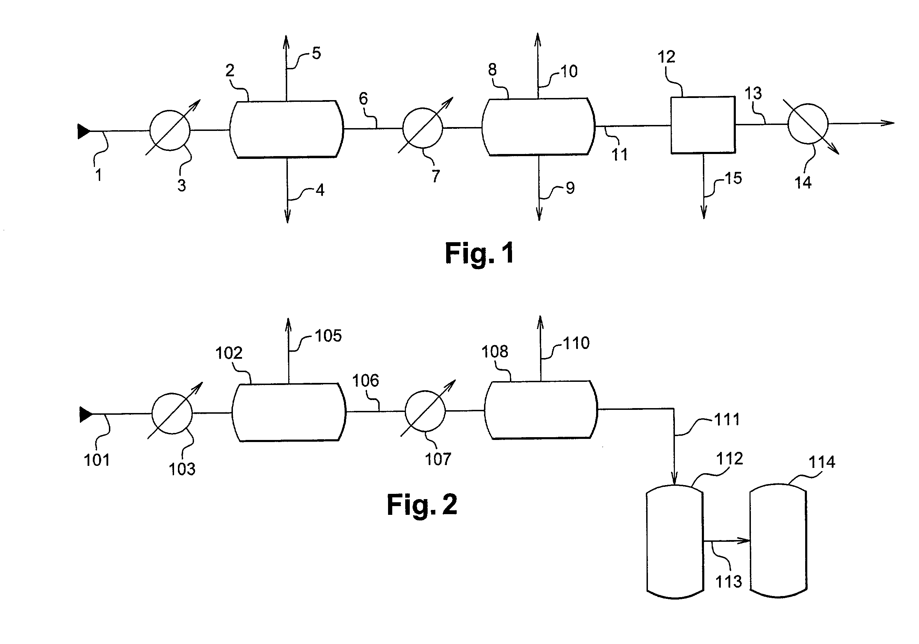

En référence à la figure 1, on décrit un schéma classique de procédé de séparation multi-étagé (en général 2 à 3 étages, 2 étages étant représentés sur la figure 1), les éléments étant au niveau des topsides du navire. Le brut (ou huile lourde), contenant une phase huileuse, une phase aqueuse et une phase gazeuse arrive par une conduite (1) au niveau du premier séparateur (2), aussi dénommé "slug catcher". Ce premier séparateur assure d'une part une fonction de séparation diphasique (liquide/gaz) ou triphasique (huile/eau/gaz) et, d'autre part, la fonction d'empêcher les bouchons ou surpressions de passer aux niveaux ultérieurs du procédé. Dans la mesure où il s'agit dans le reste du procédé de séparer une émulsion, toute instabilité, tout coup de butoir ou surpression dans le procédé est négatif car ils perturberont la décantation gravitaire des gouttelettes dans les phases huile et eau et, par conséquent, les séparations gaz/liquide et huile/eau dans toute la suite du traitement. C'est pourquoi le temps de séjour dans le premier séparateur est généralement assez long : plusieurs minutes, souvent plus de cinq minutes. Pour des débits importants, le volume du premier séparateur ou slug catcher est important, jusqu'à plusieurs fois le volume du riser ou tubing de forage. On arrive à des volumes pouvant atteindre quelques centaines de m³. Autant à terre de tels volumes ne posent pas de problème, autant en mer ils peuvent être problématiques.

Pour faciliter la séparation en général on chauffe les fluides avant le premier séparateur dans un échangeur (3). Typiquement, les conditions opératoires du premier séparateur sont: température de 60-90°C et une pression de 10-20 bars ; exceptionnellement la pression peut même dépasser 50 bars.

Dans un schéma de traitement conventionnel, pour respecter les spécifications en RVP, en BSW et en sel, les opérations suivantes doivent être réalisées avant le transfert des bruts dans les cuves de stockage:
- gestion des bouchons de gaz et liquides (slug-catcher);
- séparation eau/huile;
- stabilisation des bruts; et
- déshydratation et dessalage.

Typiquement le chauffage des fluides de 45°C à 65°C est nécessaire d'une part pour améliorer la séparation huile/eau, c'est-à-dire la coalescence des gouttelettes et leur décantation dans les phases liquides, et d'autre part pour favoriser le dégazage des bruts afin de les stabiliser. Pour assurer ces fonctions, en particulier la déshydratation et le dessalage, la température opératoire se situe le plus souvent entre 80°C et 100°C.

Le séparateur opère comme un séparateur triphasique. L'eau séparée est envoyée par la conduite (4) vers l'unité de traitement d'eau (non représentée). Le gaz quitte le séparateur par la conduite (5) vers une unité de traitement des gaz (non représentée). La phase huileuse séparée quitte le séparateur par la conduite (6) vers une unité de séparation ultérieure.

La phase huileuse de la conduite (6) est réchauffée dans un échangeur (7) avant de pénétrer dans un second séparateur (8). Les deux étapes de chauffage ont pour but d'assurer la stabilisation du brut. Le second séparateur est un séparateur triphasique et produit un courant d'eau, un courant de gaz et un courant de phase huileuse. Les conditions opératoires de ce second séparateur sont en général: température de 60°C à 90°C et une pression de l'ordre de la pression atmosphérique.

Dans un schéma de séparation à 3 étages, le deuxième séparateur opère dans des conditions de pression intermédiaires entre la pression du premier séparateur et la pression atmosphérique. La phase huileuse est ensuite amenée dans le troisième séparateur qui opère à pression atmosphérique. Dans la suite, on ne considérera pas la variante à 3 étages; il est cependant entendu que le problème des coups de butoir se pose quelque soit le nombre d'étages.

Sont produits des courants d'eau et de gaz par les conduites (9) et (10), respectivement. L'eau est envoyée vers l'unité de traitement d'eau tandis que le gaz est envoyé vers une unité de traitement des gaz. Un courant de phase huileuse est soutiré du séparateur par la conduite (11). Dans la mesure où le dernier séparateur opère à pression atmosphérique, les liquides sont aussi dégazés. Le courant de phase huileuse contient encore de l'eau (jusqu'à parfois 10%). Ce courant est alors envoyé vers une unité de dessalage/déshydratation. Ces deux fonctions peuvent être combinées en un seul dispositif. Dans certains cas où le dessalage n'est pas nécessaire on peut seulement procéder à la déshydratation. Cette unité est notée (12) sur le schéma et est un coalescer électrostatique. Une différence de potentiel est appliquée entre deux plaques pour améliorer la séparation huile/eau. Pour la fonction de dessalage, on injecte de l'eau de lavage dans la veine "fluides" à l'entrée du dessaleur, juste en amont d'une vanne de mélange. L'eau de lavage peut être de l'eau déminéralisée, de l'eau de mer dé-aérée, voire de l'eau de production traitée au préalable.

Le brut ainsi traité est soutiré par la conduite (13) puis est refroidi au niveau de l'échangeur (14) avant d'être envoyé soit vers des cuves de stockage en attente d'enlèvement, soit directement vers un moyen de transport des bruts traités tels que pétroliers ou pipe-lines. L'eau est soutirée du déshydrateur (12) par la conduite (15) et envoyée vers l'unité de traitement d'eau ou retournée vers un des deux séparateurs cités ci-dessus. En effet, dans certains cas où l'huile est difficile à séparer de la phase aqueuse, le recyclage de l'eau (phase aqueuse) extraite des équipements se trouvant à l'aval permet de faciliter la séparation huile/eau en fonctionnant dans des conditions dites d'inversion d'émulsion, c'est-à-dire un passage d'une émulsion eau dans huile à une émulsion huile dans eau, laquelle est plus facile à séparer.

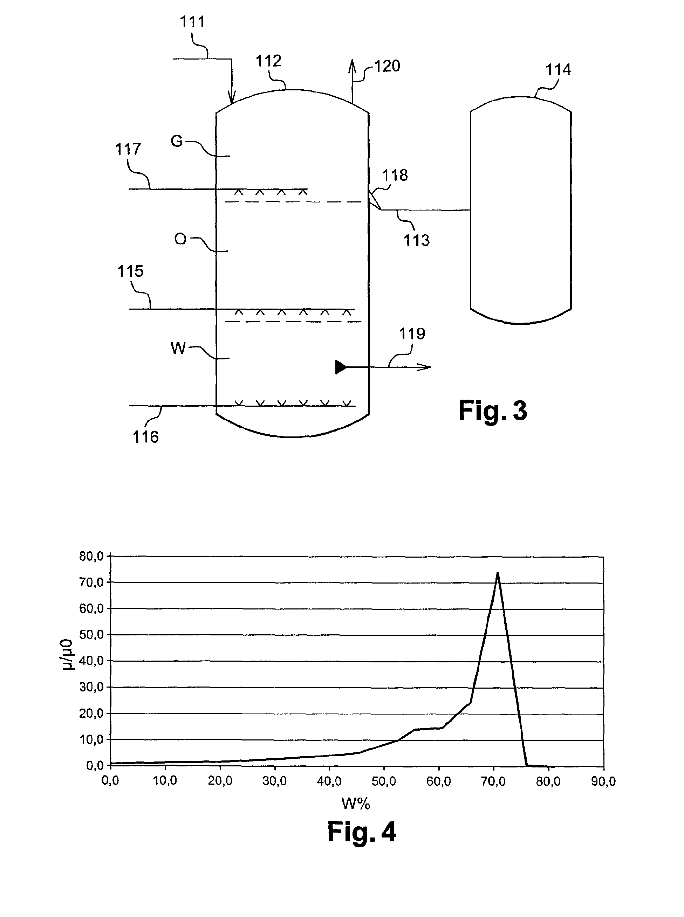

Ceci est représenté à la figure 4, qui donne un exemple de viscosité en fonction de la teneur en eau de l'émulsion. Il peut s'agir d'une émulsion eau-dans-huile si la teneur en eau est inférieure à une limite spécifique du fluide extrait (par exemple 65 %) ou huile-dans-eau si la teneur en eau est supérieure à cette limite. La limite correspond à un point d'inversion de l'émulsion et se trouve dans une fourchette de 0 à 80% d'eau. L'émulsion est plus facile à séparer lorsqu'il s'agit d'une émulsion huile-dans-eau.

En outre, l'eau retournée vers le séparateur est ensuite évacuée avec l'eau de production extraite dans le séparateur, vers l'unité de traitement d'eau. En particulier, l'eau retournée vers le séparateur depuis le dessaleur se sature en gaz dissous dans le séparateur et devient de ce fait plus facile à traiter dans l'unité de traitement d'eau.

L'eau traitée dans l'unité de traitement d'eau est soit rejetée dans la mer, soit réinjectée dans le sous-sol.

En référence à la figure 2, on décrit un schéma de procédé selon l'invention. Dans ce procédé, le brut arrive par une conduite (100) au niveau du premier séparateur (102). Ce premier séparateur, par rapport au premier séparateur de l'art antérieur n'assure pas de fonction de séparation triphasique ni de fonction de "slug catcher". Il n'assure que la fonction de séparation gaz/liquide. En effet, dans le procédé selon l'invention on peut supporter des surpressions sans gêner le traitement au niveau aval. Par rapport au premier séparateur (2) de la figure 1, le séparateur (102) présente une taille nettement inférieure, le volume étant généralement compris entre 35 % et 55 % de celui du séparateur (2), pour un même débit de brut à traiter.

Dans le schéma selon l'invention, seule la fonction dégazage est indispensable pour des raisons de sécurité. Le chauffage à une température maximale de 65°C est alors suffisant. Ceci permet de réduire le temps de rétention dans les cuves de traitement et par la même la taille des cuves. Cette température de 65°C est une limite supérieure compatible avec les peintures de protection des cuves de stockage.

Le séparateur (102) peut être précédé d'un échangeur de chaleur (103), mais celui-ci recevra moins d'énergie que son homologue de l'art antérieur. Le séparateur (102) produit deux courants, l'un de gaz par la conduite (105) et l'autre de liquide, à savoir une émulsion, par la conduite (106). L'émulsion est envoyée vers un séparateur à pression atmosphérique (108), éventuellement par un échangeur (107). A nouveau le besoin de chauffage n'est en général pas aussi élevé que dans l'art antérieur.

Les surfaces d'échanges thermiques selon l'invention sont généralement comprises entre 10 % et 30 % de celles nécessaires au procédé classique. Le séparateur à pression atmosphérique est présent notamment à des fins de sécurité, car les fluides qui circulent doivent être à pression atmosphérique. Cependant, ce second séparateur n'est pas nécessaire à la mise en oeuvre de l'invention si le premier séparateur est à pression atmosphérique puisque le second séparateur n'assure qu'une simple fonction de dégazage à basse pression. Comme dans l'art antérieur un courant de gaz est produit par la conduite (110) et il est traité de la même manière. On obtient une fraction liquide émulsionnée dégazée par la conduite (111). Cette fraction liquide émulsionnée contient huile et eau sous forme d'une émulsion. On se référera à nouveau à la figure 4 commentée plus haut.

En général il n'est pas nécessaire de déshydrater cette fraction liquide ; on peut cependant procéder à cette déshydratation si nécessaire. La fraction liquide émulsionnée est alors envoyée vers la seconde partie du dispositif selon l'invention.

Typiquement, les conditions opératoires du premier séparateur sont: température de 35°C à 65°C et une pression de 10 à 40 bars. Typiquement, les conditions opératoires du second séparateur atmosphérique sont : température de 45°C à 65°C et une pression de 1,2 bar à 2 bars absolu. Cette fraction liquide émulsionnée est ensuite envoyée vers la seconde partie du procédé.

La seconde partie du procédé ne se situe plus au niveau des topsides, mais dans la coque du support flottant. On obtient ainsi un gain au niveau des topsides qui dans l'art antérieur pouvait atteindre deux ou trois étages. Cette seconde partie contient au moins une cuve de décantation, dans laquelle les temps de séjour des fluides peuvent varier typiquement de 4 heures à 24 heures.

La fraction liquide émulsionnée arrive par la conduite (111) dans la cuve de lavage et stripage (112), laquelle produit un courant d'huile ne contenant que peu d'eau, ce courant alimentant un décanteur final (114) par une conduite (113) ou un déversoir.

La fraction liquide émulsionnée dégazée est une fraction qui comprend en général moins de Nm3 gaz dissous/Nm3 brut, notamment entre 0,5 et 2 Nm3 gaz dissous/Nm3 brut. (Nm3 signifiant Nm3 normal).

En référence à la figure 3, on décrit un schéma de la seconde partie du procédé selon l'invention. La fraction liquide dégazée arrive par la conduite (111) et pénètre en tête de la cuve (112). Dans la cuve (112), il y a trois phases gaz (G), huile (O) et eau (W). Juste au-dessus de l'interface huile/eau se trouve un système de distribution d'eau (115), par exemple une douche. Le débit du système de distribution d'eau est de 0% (au début de la production le brut ne contient pas d'eau) à 90% en volume du débit des fluides provenant des topsides, de préférence 0% à 15% en volume. L'injecteur est ne général du type produisant des gouttes de taille relativement grande, afin de favoriser la coalescence.

Sans vouloir être liée par une théorie, la demanderesse pense que le système de distribution d'eau a plusieurs effets. Il contient ou confine l'émulsion vers le bas. Il agit sur la consistance de ce qui est autour de la gouttelette, rend l'émulsion moins stable et favorise la coalescence. Elle peut modifier les équilibres physiques et chimiques de l'interface huile/eau si on injecte dans l'eau de lavage des produits chimiques tels que acides ou démulsifiants. Le système de distribution d'eau rend en outre l'interface "dynamique" en ce sens que l'arrosage évite la stagnation et crée une dilution continue dans la zone d'interface.

La fonction stripage est assurée par injection de gaz en pied de la cuve à l'aide un distributeur (116). Typiquement, l'injection de gaz est de entre 0 à 5 m³ de gaz par m³ de liquide à traiter. Premièrement, le gaz augmente la tendance à la coalescence car les bulles de gaz favorisent l'agglomération des gouttelettes les plus fines. Deuxièmement, quand le gaz est acide (notamment en raison de l'existence de CO₂) cette acidité va jouer sur les naphténates, en empêchant la formation de sels naphténiques. L'acidité du gaz peut empêcher la réaction qui sinon se produirait en présence de cations (tems que Ca²⁺). En outre la douche conduit à une dilution des espèces salines formées qui sinon conduiraient à des dépôts, qui sont encore empêchés mécaniquement du fait de l'absence de stagnation. Les naphténates se retrouvent dans l'eau séparée.

Il est aussi possible de prévoir un lavage supplémentaire par un système de distribution d'eau (117) similaire au système de distribution d'eau (115) mais cette fois à l'interface gaz/eau.

Ce système de distribution d'eau peut ne couvrir, par comparaison avec le système de distribution d'eau (115), qu'une partie de la section de la cuve. Il permet de réduire voire d'éliminer le moussage.

Les systèmes de distribution d'eau et de stripage permettent ainsi d'obtenir un ou plusieurs des effets ci-dessous:
- améliorer la coalescence entre les gouttelettes d'eau dans l'huile ou d'huile dans l'eau (le type d'émulsion dépendant de la proximité à une phase ou l'autre);
- l'inversion de phase étant localisée à l'interface, on obtient un gain par rapport à un séparateur classique;
- casser les émulsions;
- éliminer ou réduire la formation de dépôts organiques et/ou minéraux, en particulier des dépôts de naphténates au niveau des interfaces huile/eau ou dans les phases huile et/ou eau.

La qualité et la composition des eaux de lavage peuvent varier et sont définies en fonction des caractéristiques physico-chimiques des bruts à traiter. L'eau de lavage peut être de l'eau fraîche, de l'eau de mer non traitée ou traitée (désoxygénée et/ou filtrée), de l'eau de production issue des séparateurs, non-traitée ou traitée (filtration des solides et élimination des résidus d'hydrocarbures en suspension, etc.). L'eau de lavage peut aussi contenir des additifs chimiques divers tels que acide acétique, désémulsifiants, produits anti-dépôts organiques ou minéraux, etc. La qualité et la composition du gaz de stripage peuvent varier et sont définies en fonction des caractéristiques physico-chimiques des bruts à traiter. Le gaz de stripage peut être un gaz issu de production des topsides, ou des fumées (contenant notamment du CO₂) venant des unités de gaz d'inertage des cuves de stockage de bruts traités, etc.

Les conditions opératoires dans la cuve (112) sont en général: le temps de séjour dans la cuve est de 4 à 24 heures, typiquement de 6 à 12 heures, la pression est par exemple comprise entre la pression atmosphérique et quelques centaines de millibars (résultant de l'injection de gaz), la température est par exemple entre la température ambiante et 65°C, en général entre 40°C et 50°C.

La taille de la cuve est fonction du temps de séjour et du début; typiquement la taille correspond à celle d'une cuve classique de stockage d'un FSO.

Le fait de gérer l'eau à ce niveau, celui des cuves, est plus facile et a un coût moindre. En effet, la qualité de l'eau au niveau des dessaleurs dans l'art antérieur est mauvaise tandis que l'eau à traiter selon l'invention est d'une meilleure qualité.

La phase huileuse est par exemple récupérée au niveau d'une surverse (118) puis envoyée vers le décanteur (114) par la conduite (113). L'eau générée est pompée en fond de cuve et est envoyée vers l'unité de traitement de l'eau par la conduite (119). Le gaz est évacué par la conduite de tête (120) et est envoyé vers les compresseurs.

Le procédé mis en oeuvre dans la seconde partie du procédé peut aussi être mis en oeuvre sur tout type d'émulsion, et pas nécessairement sur une émulsion dégazée ou pas nécessairement au même endroit. L'invention couvre aussi cette seule seconde partie mettant en oeuvre un lavage et/ou un stripage.

Par rapport à l'art antérieur, l'invention offre de nombreux avantages. D'une part la localisation d'une part importante du procédé dans les cuves permet d'économiser du matériel au niveau des topsides et d'autre part il est possible encore d'obtenir un gain de ballast dans le cas des barges. Dans l'état de la technique, pour maintenir le brut acide afin d'éviter le dépôt des naphténates, il était nécessaire souvent d'opérer sous pression pour avoir du gaz acide présent en même temps que le brut. Une pression importante entraîne toujours des surcoûts au niveau équipement, consommation et maintenance.

Le procédé selon l'art antérieur nécessite un apport de chaleur plus important (alors qu'à la fin du procédé il est nécessaire de refroidir le brut pour le stockage). En effet, dans l'art antérieur on joue sur les effets des temps de séjour et sur le chauffage pour casser les émulsions, ce qui oblige à chauffer beaucoup pour refroidir ensuite, opérations qui dans la pratique doublent la taille des échangeurs.

Dans le procédé selon l'art antérieur, l'eau nécessaire pour la séparation dans le cas des fluides difficiles à traiter est une eau technique, alors qu'une eau simple peut être utilisée dans l'invention. En outre, pour séparer l'émulsion dans l'art antérieur, dans le cas où ne souhaite pas ajouter trop d'eau, il était nécessaire de jouer sur:
- la température (le chauffage facilitant le cassage des émulsions) mais ceci implique des coûts supplémentaires;
- le BSW mais on dégrade alors les qualités du brut final ou on impose des conditions opératoires subséquentes au niveau du déshydrateur drastiques;
- le temps de rétention mais alors on obtient des volumes importants;
- l'eau ajoutée doit contenir des additifs chimiques, ce qui pose un problème de coût et de retraitement.

L'invention permet d'éviter un ou plusieurs des ces inconvénients.

Dans la mesure où le procédé selon l'invention peut s'affranchir d'un déshydrateur, il y a un gain certain en équipement et en coûts de fonctionnement.

L'invention trouve à s'appliquer à des bruts complexes ou difficiles à traiter. Des bruts obtenus par forage en mer profonde sont difficiles à traiter, car le gaz qui permet l'extraction est sous une pression forte, ce qui occasionne des instabilités lors de l'opération. A titre d'exemple, il est courant de moduler de façon manuelle des vannes en amont des topsides pour gérer les bouchons qui se forment. Un brut complexe est un brut qui présente une ou plusieurs des caractéristiques suivantes:
- il est très visqueux (par ex. quelques centaines de cPs dans les conditions normales);
- il est dégradé;
- il présente une composition d'eau de production qui est contaminée par de l'eau réinjectée, cette eau réinjectée étant de l'eau ayant servi dans les topsides;
- il contient des composés chimiques favorisant les dépôts tels que les naphténates et carbonates (qui peuvent interagir avec l'eau de production);
- il favorise le moussage et/ou l'émulsion lors de la remontée dans le tubing du riser;
- il contient des paraffines, par exemple en C₂₀₊.

Un brut complexe typique de l'invention est un brut naphténique.

L'invention permet de passer d'un temps de séjour dans les topsides de 20-30 minutes pour l'art antérieur à un temps de séjour inférieur à 10 minutes, par exemple compris entre 3 et 8 minutes, notamment de l'ordre de 5 minutes, pour l'invention.

Bien que l'invention soit particulièrement destinée à être utilisée sur un support flottant, il est possible de l'appliquer au sol.

## Revendications

1. Procédé de purification de brut de forage comprenant les étapes suivantes:
(a) séparation du brut en deux fractions, gaz et émulsion dégazée; et
(b) séparation de ladite émulsion dégazée en eau et huile.

2. Procédé selon la revendication 1, dans lequel l'étape (b) comprend la sous-étape (b1) de lavage de ladite émulsion avec de l'eau au niveau de l'interface huile/eau.

3. Procédé selon la revendication 1 ou 2, dans lequel l'étape (b) comprend la sous-étape (b2) de stripage à l'aide de gaz, de préférence un gaz acide.

4. Procédé selon l'une des revendications 1 à 3, dans lequel l'étape (b) comprend la sous-étape (b3) de lavage de ladite émulsion avec de l'eau au niveau de l'interface gaz/huile.

5. Procédé selon l'une des revendications 1 à 4, comprenant en outre une étape (c) de décantation de l'huile issue de l'étape (b).

6. Procédé selon la revendication 1, dans lequel l'étape (b) comprend une décantation.

7. Procédé selon l'une des revendications 1 à 6, dans lequel l'étape (a) comprend une sous-étape (a1) de séparation haute ou moyenne pression et une étape (a2) de séparation basse pression.

8. Procédé selon l'une des revendications 1 à 7, dans lequel l'étape (a) est mise en oeuvre à une température comprise entre 35 et 75°C, avantageusement entre 45 et 65°C.

9. Procédé selon l'une des revendications 1 à 8, dans lequel le brut de forage est un brut complexe.

10. Dispositif de purification de brut de forage comprenant:
(a) une unité de séparation (102; 108) du brut en deux fractions, gaz et émulsion dégazée; et
(b) une cuve (112) de séparation de ladite émulsion dégazée en eau et huile.

11. Dispositif selon la revendication 10, dans lequel la cuve (112) comprend une douche ou système de distribution d'eau (115) de lavage de ladite émulsion avec de l'eau au niveau de l'interface huile/eau.

12. Dispositif selon la revendication 10 ou 11, comprenant en outre un distributeur (116) de gaz de stripage en pied de la cuve (112).

13. Dispositif selon l'une des revendications 10 à 12, comprenant en outre une douche ou système de distribution d'eau (117) de lavage de ladite émulsion avec de l'eau au niveau de l'interface gaz/huile.

14. Dispositif selon l'une des revendications 10 à 13, comprenant en outre un décanteur (114) en aval de la cuve (112).

15. Dispositif de purification de brut de forage comprenant les éléments suivants:
(a) une unité de séparation (102) du brut en deux fractions, gaz et émulsion dégazée; et
(b) un décanteur de décantation de l'émulsion dégazée.

16. Dispositif selon l'une des revendications 10 à 15, comprenant un séparateur (102) haute ou moyenne pression et un séparateur (108) basse pression.

17. Dispositif selon l'une des revendications 10 à 16, pour la mise en oeuvre du procédé selon l'une des revendications 1 à 9.

18. Navire ou barge comprenant le dispositif selon l'une des revendications 10 à 17, l'unité de séparation (102; 108) étant au niveau du topside tandis que la cuve (112) ou décanteur est au niveau de la coque.

19. Procédé de séparation d'une émulsion hydrocarbonée eau-dans-huile comprenant les étapes suivantes:
(i) création d'une interface huile/eau;
(ii) lavage de ladite émulsion avec de l'eau au niveau de l'interface huile/eau; et
(iii) récupération d'un courant d'huile.

20. Procédé selon la revendication 19, comprenant en outre une étape (iv) de stripage à l'aide de gaz, de préférence un gaz acide.

21. Procédé selon la revendication 19 ou 20, comprenant en outre une étape (v) de lavage de ladite émulsion de l'eau au niveau de l'interface gaz/huile.

22. Procédé selon l'une des revendications 19 à 21, comprenant en outre une étape (vi) de décantation du fluide de l'étape (iii).

23. Dispositif de séparation d'une émulsion hydrocarbonée eau-dans-huile comprenant une cuve (112) munie d'une douche ou système de distribution d'eau (115) de lavage de ladite émulsion avec de l'eau au niveau de l'interface huile/eau.

24. Dispositif selon la revendication 23, comprenant en outre un distributeur (116) de gaz de stripage en pied de la cuve (112).

25. Dispositif selon la revendication 23 ou 24, comprenant en outre une douche ou système de distribution d'eau (117) de lavage de ladite émulsion avec de l'eau au niveau de l'interface gaz/huile.

26. Dispositif selon l'une des revendications 23 à 25, comprenant en outre un décanteur (114) en aval de la cuve (112).

27. Dispositif selon l'une des revendications 23 à 26, pour la mise en oeuvre du procédé selon l'une des revendications 19 à 22.

28. Navire ou barge comprenant le dispositif selon l'une des revendications 23 à 27 au niveau de la coque.
